# EUROPÄISCHE PATENTANMELDUNG

(11) **EP 2 026 429 A1**
(43) Veröffentlichungstag der Anmeldung: **18.02.2009**
(21) Anmeldenummer: 08014360.5
(22) Anmeldetag: 12.08.2008
(51) Int. Cl.: H02B 1/21

(54) **Kompakter Niederspannungs-Sicherheitstrennschalter mit vollständig abgedeckten Hakenklemmen**

(30) Priorität: 13.08.2007 PL 38312607
(71) Anmelder: APATOR S.A., 87-100 Torun (PL)
(72) Erfinder: Gliszczynski, Miroslaw, PL-87-100 Torun (PL); Melkowski, Lukasz, PL-86-330 Melho (PL); Lankiewicz, Sebastian, PL-62-652 Chodow (PL)
(74) Vertreter: Hoffmeister, Helmut

(57) **Zusammenfassung**

Die Erfindung betrifft einen kompakten Niederspannungs-Sicherheitstrennschalter, aufweisend:
- einen Adapter (C) zum Aufsetzen auf ein dreiphasiges, aus Sammelschienen (L1, L2, L3) bestehendes Sammelschienensystem (L),
- über einen Boden (10) des Adapters hinaus ragende Hakenklemmen, die zur Herstellung einer Strom- und Klemmverbindung der Sammelschienen (L1, L2, L3) mit den im Adapter (C) befindlichen Stromschienen vorgesehen sind.

Die Hakenklemmen sind jeweils durch ein elektrisch nichtleitendes Schutzelement (7; 8; 9) wenigstens teilweise abgedeckt.

Am Boden (10) des Adapters ist wenigstens eine Aussparung zur Unterbringung eines Plattenelementes (2; 3) vorgesehen, das das Schutzelement (7; 8; 9) trägt, wobei am Plattenelement (2; 3) wenigstens eine Öffnung zur Durchführung der Hakenklemme angeordnet ist.

Das mit dem Schutzelement (7; 8; 9) verbundene Plattenelement (2; 3) ist sowohl bei einem ersten Sammelschienen-Abstand (A1) als auch bei einem anderen, sich von dem ersten unterscheidenden Sammelschienen-Abstand (A2) an den Hakenklemmen der ersten und dritten Sammelschiene (L1, L3) abwechselnd einsetzbar.

## Beschreibung

Die Erfindung betrifft einen kompakten Niederspannungs-Sicherheitstrennschalter, der aufweist:
- einen rippenkastenförmigen Adapter zum Aufsetzen auf ein dreiphasiges, aus Sammelschienen bestehendes Sammelschienensystem,
- über einen Boden des Adapters hinaus ragende Hakenklemmen, die zur Herstellung einer Strom- und Klemmverbindung der Sammelschienen mit den im Adapter befindlichen Stromschienen vorgesehen sind,
wobei der Adapter eine Oberseite und eine der Oberseite gegenüber liegende Unterseite aufweist, die den Boden bildet,
und wobei die Hakenklemmen jeweils durch ein elektrisch nichtleitendes Schutzelement wenigstens teilweise abgedeckt sind.

Ein Niederspannungs-Sicherheitstrennschalter der eingangs genannten Art, als Sicherungslasttrennschalter bezeichnet, ist aus DE 10 2005 012 364 A1 bekannt. Das elektrisch nichtleitende Schutzelement ist an eine T-förmige Hakenklemme verrastbar aufgesetzt. Für verschiedene Sammelschienen-Abstände wird die Stelle, an der das Schutzelement an der Hakenklemme befestigt werden soll, entsprechend gewählt, und ein im Adapter entstandener offener Raum wird durch ein zusätzliches, in das Adapterunterteil einsetzbares Maskierungselement abgedeckt. Zur Anpassung an einen anderen Sammelschienen-Abstand soll der Adapter um 180° umgedreht werden. Bei einer anderen Ausführungsform sind die T-förmigen Hakenklemmen entlang einer inneren Metallschiene verschiebbar geführt. Zwar beschränkt sich die DE 10 2005 012 364 A1 auf die Beschreibung des Adapters und seiner beweglichen Hakenklemmen, dennoch ist anzunehmen, dass es sich um eine an sich bekannte Konstruktion handelt, die beispielsweise in der als Stand der Technik zu DE 10 2005 012 364 A1 aufgeführten Schrift DE 40 03 260 C2 gezeigt worden ist.

Es sind auch kompakte Sicherheitstrennschalter bekannt, bei denen das elektrisch nicht leitende Schutzelement für die Hakenklemme am Adapter des Sicherheitstrennschalters befestigt wird. Das Schutzelement ist für alle drei Phasen L1, L2, L3 identisch. Zwecks Anpassung des Trennschalters an einen anderen Sammelschienen-Abstand wird dasselbe Schutzelement an entsprechenden Stellen des Adapters befestigt, und die darin entstandenen freien Öffnungen werden mit Hilfe eines zusätzlichen Schutzelementes am Adapter maskiert.

Ferner sind Sicherheitstrennschalter bekannt, bei denen ein die Hakenklemme maskierendes Schutzelement am Adapter des Sicherheitstrennschalter befestigt ist. Auch hier ist das Schutzelement für alle drei Phasen L1, L2, L3 identisch. Solche Apparate haben jedoch keine Möglichkeit, den Sicherheitstrennschalter an einen anderen Sammelschienen-Abstand anzupassen.

Aus DE 100 62 634 ist ein haubenartiges, an der Hakenklemme eines Leistentrennschalters aufsetzbares Schutzelement bekannt. Um das Herausfallen des Schutzelementes aus dem Leistentrennschalter zu verhindern, wird es reibschlüssig mit der Hakenklemme verbunden und in einem Leistenkörper des Leistentrennschalters gehalten.

Diese Konstruktion weicht jedoch vom Oberbegriff der vorliegenden Erfindung ab.

Ein aus EP 1 271 727 bekanntes Schutzelement ist zum Aufsetzen an einer schwenkbaren Hakenklemme bestimmt, die an einer Aussparung des Adapterunterteils befestigbar ist. Die Verwendung der drehbaren Hakenklemme ermöglicht den Anschluss von Abflusskabeln sowohl von unten als auch von oben. Eine Anpassung an zwei unterschiedliche Sammelschienen-Abstände kann durch entsprechende Führungen der Hakenklemme realisiert werden.

Aufgabe der Erfindung ist, einen kompakten Niederspannungs-Sicherheitstrennschalter zu konzipieren, der einen verbesserten Schutz vor zufälligen Berührungen sowie vor Kurzschlüssen während der Montage am Sammelschienensystem bietet. Dabei soll der Niederspannungs-Sicherheitstrennschalter an verschiedene Sammelschienen-Abstände anpassbar sein, ohne Abstriche am verbesserten Schutz zu machen.

Diese Aufgabe ist durch einen gattungsgemäßen kompakten Niederspannungs-Sicherheitstrennschalter gelöst, bei dem
- am Boden des Adapters wenigstens eine Aussparung zur Unterbringung eines Plattenelementes vorgesehen ist, das das Schutzelement trägt,
- an dem Plattenelement wenigstens eine Öffnung zur Durchführung der Hakenklemme angeordnet ist,
- und dass das Plattenelement mit seinem Schutzelement sowohl bei einem ersten Sammelschienen-Abstand als auch bei einem anderen, sich von dem ersten unterscheidenden Sammelschienen-Abstand an den Hakenklemmen der ersten und dritten Sammelschiene abwechselnd einsetzbar ist.

Es sei angemerkt, dass es sich bei dem kompakten Niederspannungs-Sicherheitstrennschalter, im Weiteren Trennschalter genannt, um ein Gerät handelt, das aus einem Adapter, einem auf den Adapter aufgesetzten Sicherungslastrenner und einem Deckel mit nebeneinander liegenden Sicherungseinsätzen besteht.

Der Sammelschienen-Abstand wird normalerweise zwischen Längssymmetrielinien zweier benachbarten Sammelschienen bemessen, vorausgesetzt, dass das Breitenmaß der Sammelschienen gleich ist. Der Adapter gemäß Erfindung ist grundsätzlich für zwei Sammelschienen-Abstände von der Größe 60 mm und 100 mm gedacht. Die anderen Sammelschienen-Abstände, wiem 40 mm und 80 mm, sind nicht ausgeschlossen.

Das die Hakenklemme abzudeckende Schutzelement kann mit dem Plattenelement verbunden sein und einen einheitlichen Schutzkörper bilden, der vorzugsweise aus einem Materialstück im Spritzgußverfahren gefertigt ist. Als Material für den Schutzkörper eignen sich insbesondere thermoplastische Kunststoffe, die sich durch verbesserte mechanische Eigenschaften, wie Härte und Stoßfestigkeit, sowie thermische Beständigkeit auszeichnen, beispielsweise Polycarbonate.

Vorzugsweise ist das über dem Plattenelement angeordnete Schutzelement haubenförmig ausgebildet, so dass die Hakenklemme vollständig abgedeckt werden kann. Dies ist von großem Vorteil, da dadurch die Gefahr einer zufälligen Berührung der Hakenklemmen nahezu ausgeschlossen ist.

Der Schutzkörper kann mit dem Boden des Adapters verrastbar oder verschraubbar sein. Eine bevorzugte Rastverbindung kann federnde Stege, Laschen, Zungen oder Rastdaumen umfassen, die in entsprechende Nuten, Schlitze, Hülsen und Abstufungen des Gegenelementes eingreifen können.

Die am Boden des Adapters angeordneten Aussparungen sowie die über den Boden ragenden Hakenklemmen können durch die abnehmbar befestigbaren, auswechselbaren Schutzkörper sowohl bei dem 60mm-Sammelschienen-Abstand als auch bei dem größeren, 100mm-Sammelschienen-Abstand abgedeckt sein, ohne den Aufbau des Adapters und der Schutzkörper in irgendeiner Weise verändern zu müssen.

Ein weiterer Vorteil ist, dass man für zwei Adapter für unterschiedliche Sammelschienen-Abstände nicht vier, sonder zwei auswechselbare Schutzkörper braucht. Der Einsatz eines Adapters für unterschiedliche Sammelschienen-Abstände ist auch möglich.

Die Erfindung ist in einem Ausführungsbeispiel anhand der Zeichnung näher erläutert. Die Figuren zeigen:
- Fi.1: einen kompletten Trennschalter in einer perspektivischen Ansicht;
- Fig. 2: einen kompletten Adapter in einer perspektivischen Ansicht von oben;
- Fig. 3: den Adapter gemäß Fig. 2 in einer perspektivischen Ansicht von unten;
- Fig. 4: den Adapter gemäß Fig. 2, für 60mm-Sammelschienen-Abstand, in einer schematischen Draufsicht auf den Boden des Adapters;
- Fig. 5: den Adapter gemäß Fig. 2, für 100mm-Sammelschienen-Abstand, in einer schematischen Draufsicht auf den Boden des Adapters;
- Fig. 6: ein Basisteil des Adapters, in einer perspektivischen Ansicht von oben;
- Fig. 7: das Basisteil gemäß Fig. 6, in einer perspektivischen Ansicht von unten;
- Fig. 8: einen ersten Schutzkörper in einer perspektivischen Ansicht auf seine Unterseite;
- Fig. 9: den Schutzkörper gemäß Fig. 8 in einer perspektivischen Ansicht auf seine Oberseite;
- Fig. 10: einen zweiten Schutzkörper in einer perspektivischen Ansicht auf seine Unterseite;
- Fig. 11: den Schutzkörper gemäß Fig. 10 in einer perspektivischen Ansicht auf seine Oberseite;
- Fig. 12: eine mittlere Stromschiene des Adapters in einer perspektivischen Ansicht;
- Fig. 13: eine seitliche Stromschiene für 100mm-Sammelschienen-Abstand, in einer perspektivischen Ansicht;
- Fig. 14: eine seitliche Stromschiene für 60mm-Sammelschienen-Abstand, in einer perspektivischen Ansicht;
- Fig. 15: einen kompletten Kontakt;
- Fig. 16: den kompletten Adapter gemäß Fig. 3, aufgesetzt auf ein 60mm-Sammelschienesystem, in einer perspektivischen Ansicht von unten;
- Fig. 17: den Adapter gemäß Fig. 16 in einer schematischen Seitenansicht;
- Fig. 18: den kompletten Adapter gemäß Fig. 3, aufgesetzt auf ein 100mm-Sammelschienesystem, in einer perspektivischen Ansicht von unten.

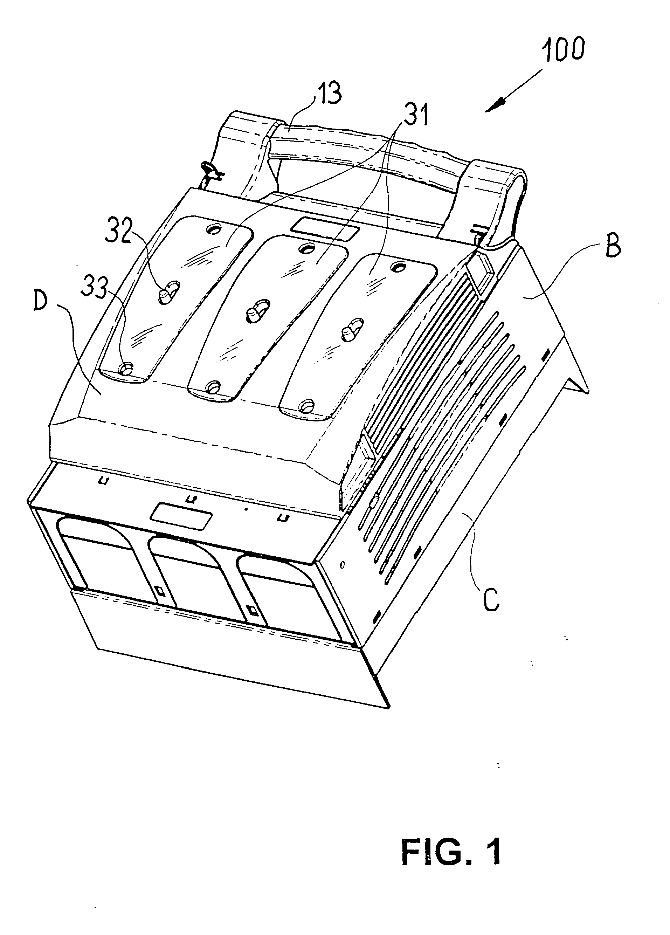

In Fig. 1 ist ein kompakter Trennschalter (Niederspannungs-Sicherheitstrennschalter 100) gezeigt, der sich aus einem kompletten Unterteil B, einem kompletten Adapter C und einem schwenkbaren kompletten Schaltdeckel D zusammensetzt. Das Adjektiv "kompletter" bezieht sich auf voll ausgestattete Teile des Trennschalters, der in Betrieb genommen werden kann.

Die Worte: "oben", "unten" beziehen sich auf die Fig. 1, bei der der Schaldeckel D ein oberes und der Adapter C ein unteres Teil des Trennschalters bilden.

Der komplette Schaltdeckel D ist schwenkbar am Unterteil B angebracht. Er weist einen Schaltgriff 13 zum Heben des Deckels um eine an sich bekannte, nicht dargestellte Drehachse auf. Ferner weist der komplette Schaltdeckel D drei nebeneinander liegende, etwa trapezförmige, transparente Scheiben 31 mit mittleren Schiebern 32 und entsprechenden Prüföffnungen 33 für Prüfwerkzeug auf. Beim aufgesetzten, verschlossenen Schaltdeckel D besteht eine elektrische Verbindung zwischen Eingangs- und Abgangsanschlüssen. Hierfür sind nicht dargestellte, unterhalb der Scheiben 31 befindliche Sicherungseinsätze vorgesehen.

Das komplette Unterteil B ist nur schematisch in Fig. 1 angedeutet. Es beinhaltet an sich bekannte, nicht dargestellte Teile, wie komplette Kontaktklammern mit ihren Sitzen, Isolationstrennwänden, entsprechenden Montageöffnungen und Montagehülsen, Kabelklemmen, Schrauben etc. Da der innere Aufbau des Unterteils B für die Erfindung irrelevant ist, wird hier auf seine Beschreibung verzichtet.

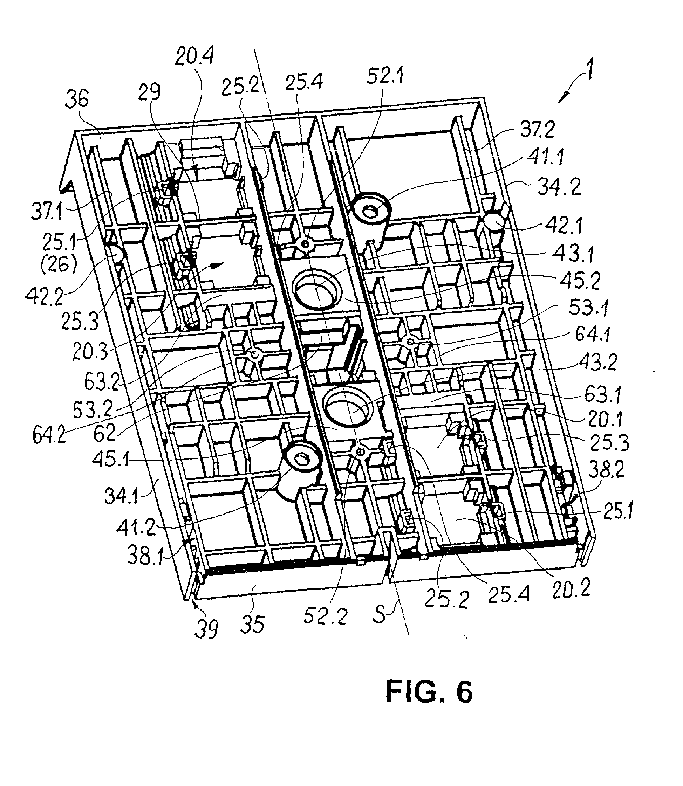

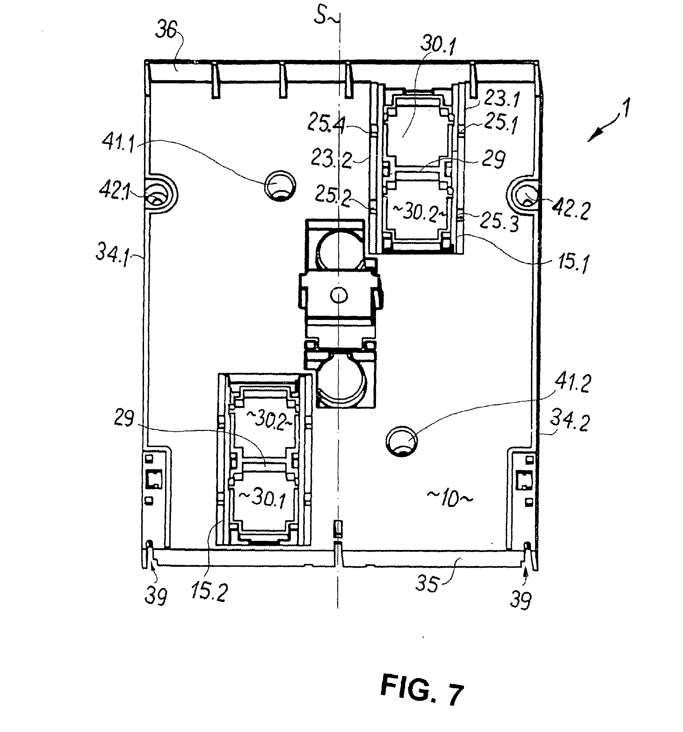

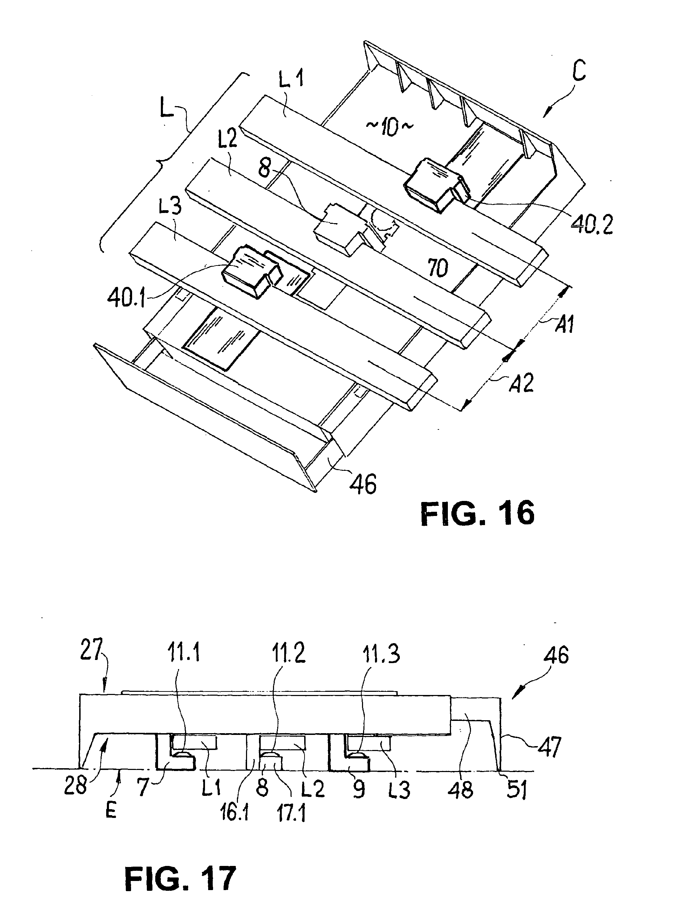

Der Adapter C weist ein in den Figuren 6 und 7 gezeigtes, flächenhaftes, rippenkastenförmiges Gehäuse 1 auf, dessen Außenkonturen an die Außenkonturen des Unterteils B angepasst sind (vgl. Fig. 1). Das Gehäuse 1 ist durch zwei Seitenwände 34.1, 34.2, eine Stirnwand 35 sowie eine hintere Wand 36 begrenzt. Der Adapter C weist eine Oberseite 27 und eine der Oberseite gegenüber liegende Unterseite 28 (vgl. Fig. 17) auf.

Innerhalb des Gehäuses 1 verlaufen parallel und in einem geringen Abstand zu den Seitenwänden 34.1, 34.2 zwei Innenstege 37.1, 37.2, die jeweils einen im vorderen Teil des Gehäuses 1 verlaufenden Führungskanal 38.1, 38.2 bilden. Die Stirnwand 35 reicht bis zu den Seitenwänden 34.1, 34.2 nicht, sondern belässt jeweils eine Eingangslücke 39 zum Führungskanal 38.1, 38.2.

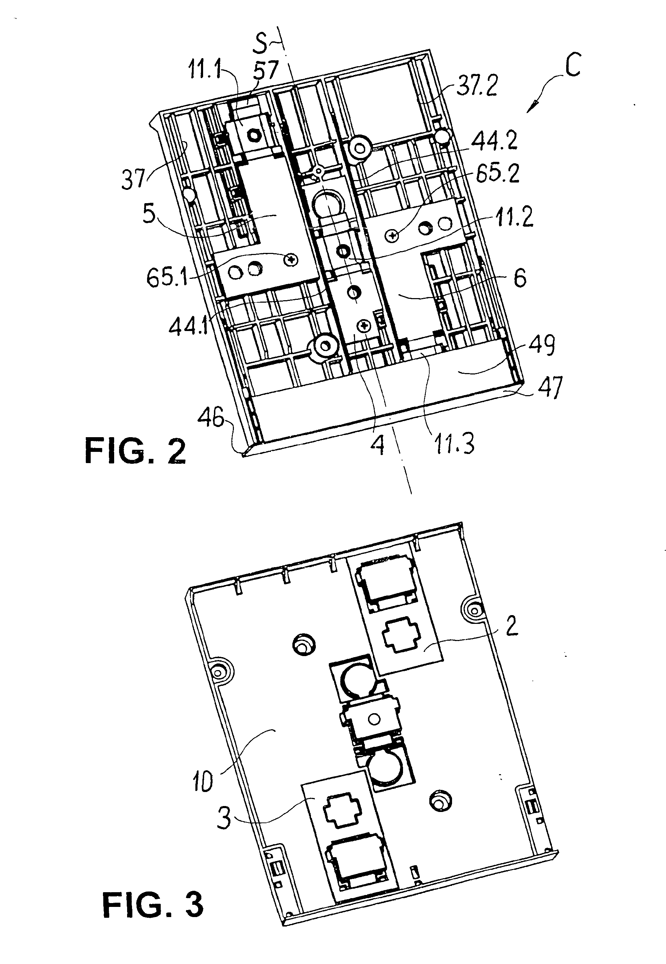

Weiterhin weist das Gehäuse 1 einen auf dessen Unterseite 28 liegenden Boden 10 auf, an dem erste Hülsen 41.1, 41.2, an den Seitenwänden 34.1, 34.2 anliegende zweite Hülsen 42.1, 42.2 sowie zwei rechteckige Aussparungen 15.1, 15.2 angeordnet sind. Die Aussparungen 15.1, 15.2 sind jeweils durch eine Querrippe 29 in zwei Öffnungen 30.1, 30.2 geteilt (vgl. Fig. 7), die gemäß Fig. 6 Sitze 20.1, 20.2; 20.3, 20.4 für Hakenklemmen 11.1, 11.3 bilden. Die Hakenklemmen 11.1, 11.3 sowie eine mittlere Hakenklemme 11.2 sind in Figuren 2 und 17 zu sehen. An den Querrippen 29 stützen sich die auf die Oberseite 27 des Gehäuses 1 gelegten seitlichen Stromschienen 5, 6 ab.
Die Hülsen 41.1, 41.2; 42.1, 42.2 reichen bis zur Oberseite 27 des Adapters. In die Hülsen 41.1, 41.2; 42.1, 42.2 werden Verbindungsmittel, wie Schrauben, zur kraftschlüssigen Verbindung des Adapters C mit dem Unterteil B eingelassen.

In einem nicht dargestellten, zweiten Ausführungsbeispiel weisen die Hülsen 41.1, 41.2; 42.1, 42.2 einen Boden auf, in dessen Mitte eine kleine Öffnung zur Durchführung einer Schraubenspitze vorgesehen ist.

In einem weiteren, nicht dargestellten Ausführungsbeispiel sind die Hülsen 41.1, 41.2; 42.1, 42.2 durch Sacklöcher ersetzt, deren Boden dünnwändig ist und dadurch von einer Schraube durchgestochen werden kann.

Längs einer Symmetrielinie S des Gehäuses 1 und innerhalb zweier parallel zur Symmetrielinie verlaufenden Isolationstrennwänden 44.1, 44.2 liegen voneinander beabstandet zwei Plättchen 45.1, 45.2 (vgl. Fig. 6), in denen jeweils eine Öffnung 43.1, 43.2 angeordnet ist. An der Symmetrielinie S liegen auch hülsenförmige Montageöffnungen 52.1, 52.2. Spiegelsymmetrisch zur Symmetrielinie S sind weitere Montageöffnungen 53.1, 53.2 angeordnet.

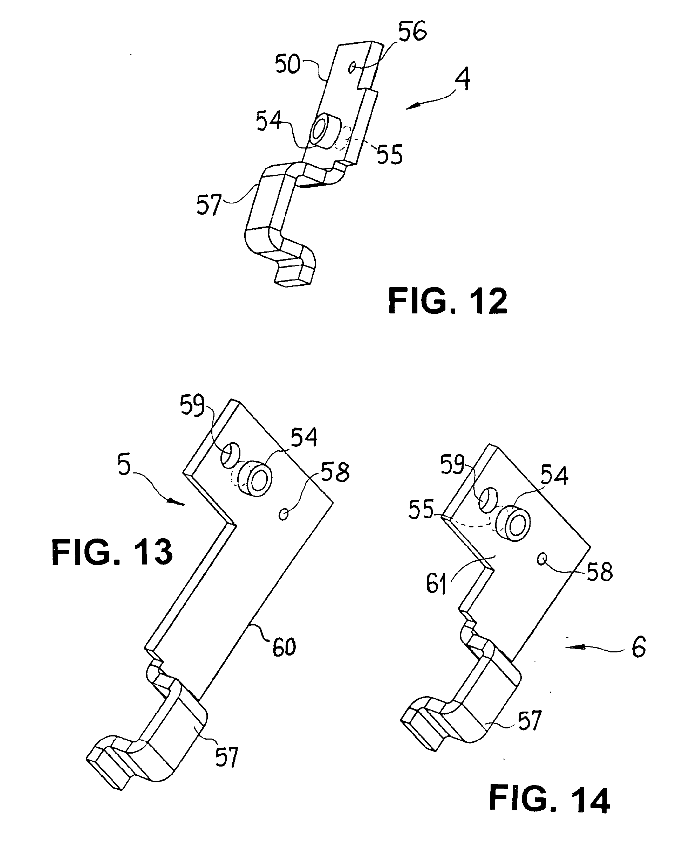

In Fig. 12 ist eine mittlere komplette Stromschiene 4 des Adapters dargestellt, bestehen aus einem Flacheisen 50 und einem hülsenförmigen Verbindungsstück 54. Am Flacheisen 50 ist eine durchgehende, mit dem Verbindungsstück 54 kommunizierende Öffnung 55 sowie eine Montageöffnung 56 angeordnet. Das flache Teil des Flacheisens 50, wo sich die Montageöffnungen 55; 56 befinden, geht in einen U-förmigen Bogen 57 über.

Ähnlich sind die seitlichen kompletten Stromschienen 5, 6 (vgl. Figuren 13 und 14) aufgebaut. Ein Flacheisen 60 bzw. 61 trägt ebenso das hülsenförmige Verbindungsstück 54 und weist einen Bogen 57, eine Montageöffnung 58 sowie eine weitere Öffnung 59 auf. Die seitlichen Stromschienen 5; 6 unterschieden sich voneinander durch ihre Gesamtlänge.

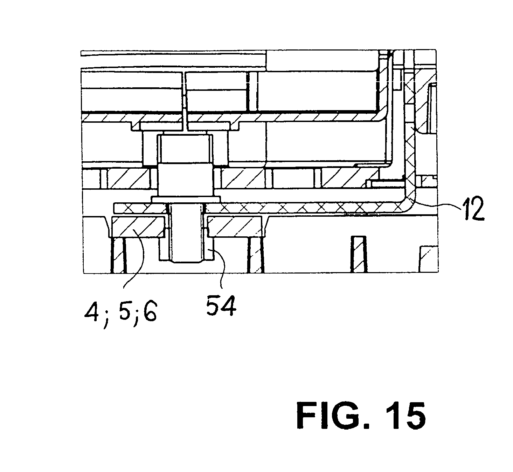

Gemäß Fig. 2 ist die mittlere Stromschiene 4 zwischen die Isolationstrennwände 44.1, 44.2 des Gehäuses 1 platziert. Dort liegt sie am Plättchen 45.1 an und ist schraubenartig über die am Flacheisen liegende Montageöffnung 56 mit der hülsenförmigen Montageöffnung 52.2 des Gehäuses 1 verbunden. Dabei stützt sich der Bogen 57 der Stromschiene 4 an einer zwischen den Isolationstrennwänden 44.1, 44.2 angeordneten Eintiefung 62 ab. Das Verbindungsstück 54 ermöglicht eine Verschraubung der Stromschiene mit einem kompletten Kontakt 12 (vgl. Fig. 15). Das Verbindungsstück 54 greift wahlweise in eine der längs Symmetrielinie S angeordneten Öffnungen 43.1, 43.2 ein.

Die Stromschienen 5, 6 stützen sich mit ihren flachen Teilen jeweils an in Fig. 6 gezeigten Wänden 63.1, 63.2 und Ripppen 64.1, 64.2 des Gehäuses 1 ab und sind dort mittels in die Montageöffnungen 58 der Stromschiene und Montageöffnungen 53.1, 53.2 des Gehäuses eingedrehter Schrauben 65.1, 65.2 festgelegt. Das Verbindungsstück 54 kann wahlweise an einer der Öffnungen 55, 59 angeordnet sein.

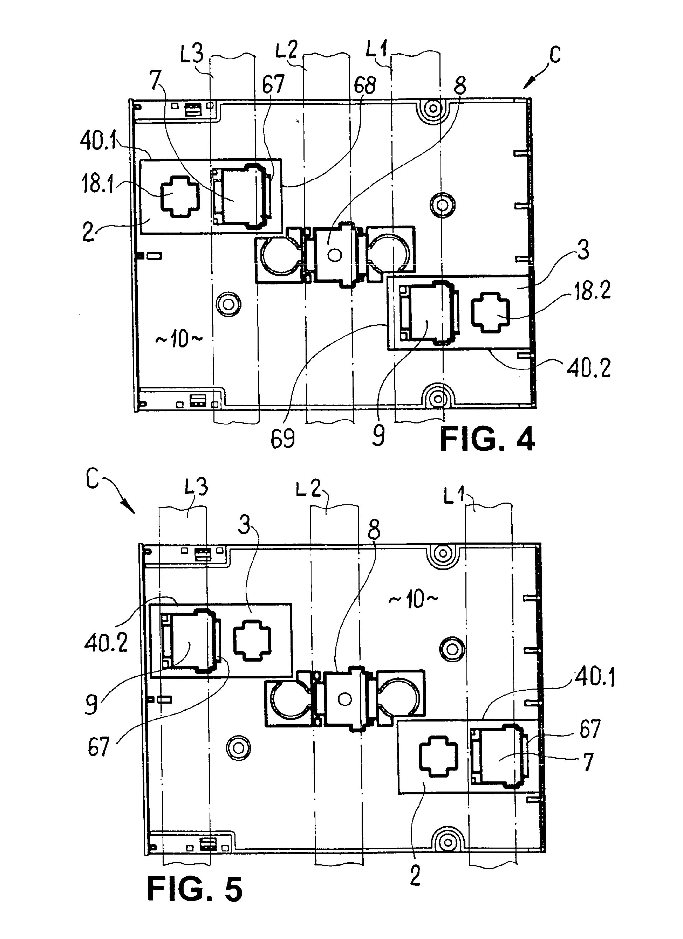

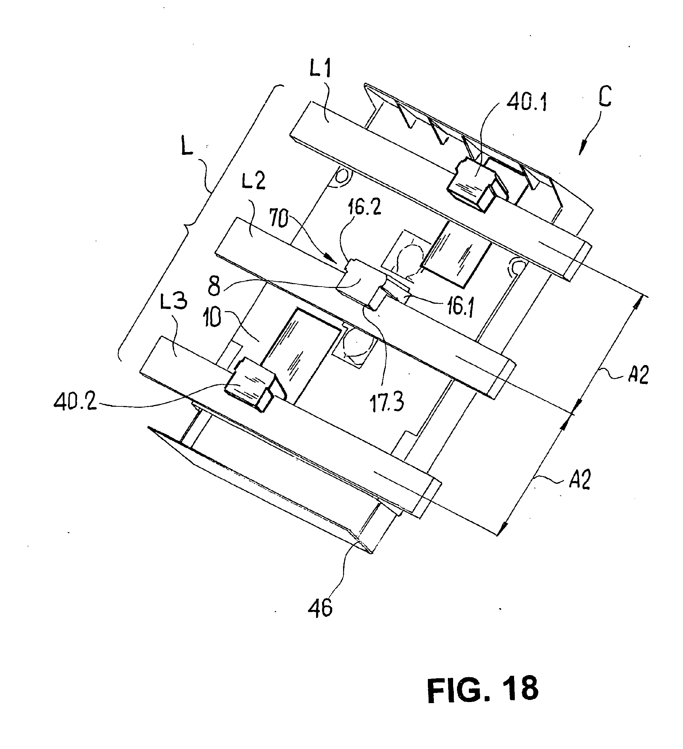

Ferner erkennt man in Fig. 2 Hakenklemmen 11.1, 11.3 und 11.2, die im Bereich der in die Sitze 20.1, 20.4 eingelegten Bögen 57 der seitlichen Stromschienen 5, 6 angeordnet sind. Diese Anordnung entspricht einem 100mm-Sammelschienen-Abstand A2 (vgl. Figuren 5 und 18). Die Lage der mittleren Hakenklemme 11.2 ist festgelegt und kann im Gegensatz zu den anderen Hakenklemmen 11.1, 11.3 nicht geändert werden.

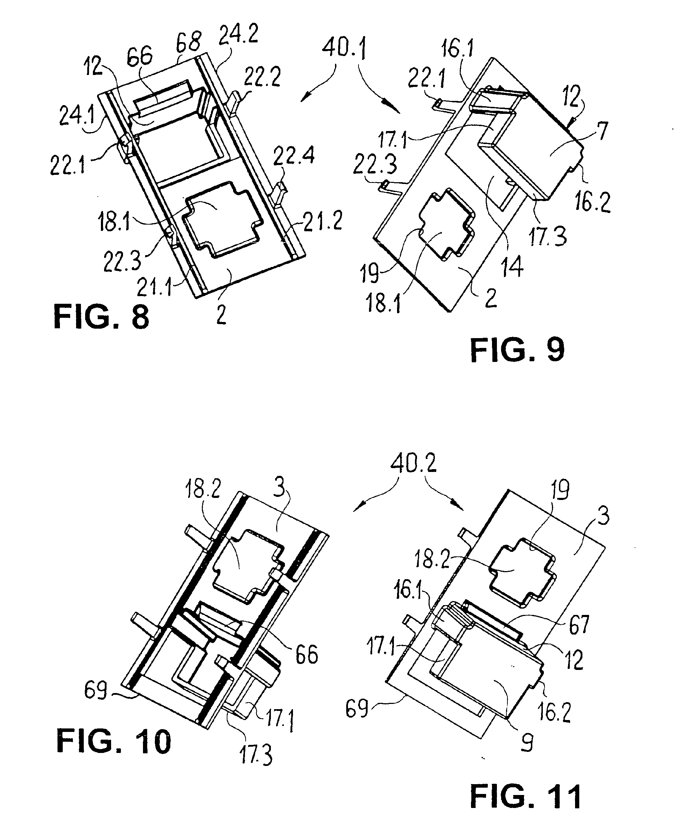

Die Figuren 8,9 10 und 11 zeigen Schutzkörper 40.1, 40.2, die die Aussparungen 15.1, 15.2 und die Hakenklemmen 11.1, 11.3 abdecken (vgl. Figuren 3, 4 und 5).

Der in Figuren 8, 9 und 10, 11 dargestellte Schutzkörper 40.1, 40.2 weist ein das Schutzelement 7, 9 tragende, rechteckige Plattenelement 2; 3 auf, an dem eine eine Öffnung 14 zur Durchführung der Hakenklemme 11.1, 11.3 angeordnet ist. Dabei geht das parallel zum Plattenelement 2; 3 angeordnete Schutzelement 7; 9 in eine rechtwinkelig über das Plattenelement 2; 3 ragende Wand 12 über, die mit dem Plattenelement 2; 3 verbunden ist.

Das Schutzelement 7, 9 und die Wand 12 sind an ihren freien Kanten mit abgewinkelten Schutzstegen 17.1, 17.2, 17.3; 16.1, 16.2 versehen, so dass das über das Plattenelement 2; 3 ragende Teil des Schutzkörpers 40.1; 40.2 als Haube wirkt. Im Übergangsbereich der Wand 12 zum Plattenelement 2; 3 ist am Plattenelement 2; 3 eine Vertiefung 66 eingebracht (vgl. Figuren 8, 10), die an der Oberseite des Plattenelementes (vgl. Figuren 11, 4 und 5) eine Erhebung 67 ergibt. An den Vertiefungen 66 stützen sich die Bögen 57 der Stromschienen ab.

Das Plattenelement 2; 3 weist zwei sich gegenüber liegende Rastrippen 21.1, 21.2 (vgl. Fig. 8) sowie vier, paarweise an an seinen Längskanten 24.1, 24.2 nach unten ragende, federnde Rastdaumen 22.1, 22.1, 22.3, 22.4 auf. In zusammengesetztem Zustand greifen die Rastdaumen 22.1, 22.1, 22.3, 22.4 in die an den Innenkanten 23.1, 23.2 der Aussparung 15.1, 15.2 angeordneten Sitzelemente 25.1, 25.2, 25.3, 25.4 (vgl. Fig. 7) ein.

Ebenso sind die Längskanten 24.1, 24.2 und die Rastrippen 21.1, 21.2 des Plattenelementes 2; 3 zu den abgestuften Innenkanten 23.1, 23.2 der Aussparungen 15.1, 15.2 kompatibel, so dass das in die Aussparung 15.1, 15.2 eingedrückte Plattenelement 2; 3 mit dem Boden 10 des Adapters C fluchtet. Wie die Fig. 6 zeigt, laufen die Sitzelemente 25.1, 25.2, 25.3, 25.4 jeweils in eine an der Unterseite 28 des Adapters C nach unten zeigende Teilhülse 26 aus.

An dem Plattenelement 2; 3 ist ein außerhalb der Öffnung 14 liegendes, entfernbares, plattenförmiges Maskierungselement 18.1; 18.2 angeordnet, das mit dem restlichen Plattenelement über umlaufende Sollbruchstellen 19 verbunden ist. Nach Bedarf kann das Maskierungselement 18.1; 18.2 mit einem einfachen Werkzeug entfernt werden.

Die Schutzkörper 40.1, 40.2 unterscheiden sich voneinander durch die Anordnung des haubenförmigen Schutzelementes 7, 9 gegenüber dem Maskierungselement 18.1, 18.2. Dies ist deutlich aus den Figuren 9, 11 und 4, 5 zu erkennen. Bei dem Schutzkörper 40.1 zeigt das Schutzelement 7 mit seinem Schutzsteg 17.3 auf das Maskierungselement 18.1, wobei die Wand 12 sowie die Eintiefung 66 bzw. Erhebung 67 einer Schmalkante 68 des Plattenelementes zugewandt ist. Bei dem Schutzkörper 40.2 zeigt das Schutzelement 9 mit seinem Schutzsteg 17.3 auf eine Schmalkante 69, wobei die Wand 12 und die Eintiefung 66 bzw. Erhebung 67 dem Maskierungselement 18.2 zugewand ist. Dies ermöglicht einen einfachen Positionswechsel der Schutzkörper 40.1, 40.2 ohne Drehung um 180° bei der Anpassung an andere Sammelschienen-Abstände (vgl. Figuren 4 und 5) .

Der gesamte Schutzkörper 40.1; 40.2 samt Rastrippen und Rastdaumen ist aus Polycarbonat in einem Materialstück im Spritzgußverfahren hergestellt.

Die Fig. 16 zeigt den auf ein Sammelschienensystem L aufgesetzten Adapter C von unten. Das Sammelschienensystem L umfasst drei Sammelschienen L1, L2, L3 von gleicher Breite, die voneinander in einem Sammelschienen-Abstand A1 = 60 mm angeordnet sind. Dies entspricht auch der in Fig. 4 gezeigten Anordnung. Der Schutzkörper 40.1 deckt vollständig die die Sammelschiene L3 umgreifende Hakenklemme 11.3 ab (vgl. insbesondere Fig. 17). Ähnlich deckt der Schutzkörper 40.2 die die Sammelschiene L1 umgreifende Hakenklemme 11.1 ab. Ein in der Mitte des Bodens 10 (vgl. Fig. 18) angeordnetes, die Hakenklemme 11.2 abdeckendes Schutzelement 8 bildet zusammen mit der Wand 12 und den Schutzstegen 16.1, 16.2; 17.1, 17.2, 17.3 einen weiteren Schutzkörper 70. Ein Plattenelement, wie bei den Schutzkörpern 40.1, 40.2, ist nicht vorhanden. Der Schutzkörper 70 deckt vollständig die die Sammelschiene L2 umgreifende Hakenklemme 11.2 ab.
Gemäß Figuren 2 und 5 sind die Sammelschienen L1, L2, L3, ebenso von gleicher Breite, in einem größeren Sammelschienen-Abstand A2 = 100 mm angeordnet. Für die Abdeckung der Hakenklemmen L1, L3 sind die gleichen Schutzkörper 40.1, 40.2 eingesetzt, wobei für die Sammelschiene L1 der Schutzkörper 40.1 und für die Sammelschiene L3 der Schutzkörper 40.2 vorgesehen sind.

Aus den Figuren 4, 5 (in Verbindung mit den Figuren 6, 7 und 16, 18) geht es hervor, dass die Schutzkörper 40.1; 40.2 die in den beiden Öffnungen 30.2 befindlichen Hakenklemmen 11.1, 11.3 für den Sammelschienen-Abstand A1 = 60 mm und zugleich die für den anderen Sammelschienen-Abstand A2 = 100mm vorgesehenen Öffnungen 30.1 abdecken, die nicht von den Hakenklemmen besetzt sind.

Dementsprechend decken die Schutzkörper 40.1; 40.2 die in den Öffnungen 30.1 befindlichen Hakenklemmen 11.1, 11.3 für den Sammelschienen-Abstand A1 = 100 mm und zugleich die für den anderen Sammelschienen-Abstand A1 = 60mm vorgesehenen Öffnungen 30.2 ab.

Gemäß Figuren 2 und 17 werden in die Eingangslücken 39 Führungselemente 48 einer zusätzlichen, stirnseitigen Sammelschienenabschirmung 46 eingeschoben. Die aus elektrisch nichtleitendem Kunststoff gefertigte Sammelschienenabschirmung 46 weist zwei zueinander senkrecht liegende, plattenförmige Abdeckelemente 47; 49 sowie die erwähnten Führungselemente 48 auf. Das in eingeschobenem Zustand parallel zur Stirnwand 35 des Gehäuses 1 verlaufende Abdeckelement 47 reicht mit seiner unteren Kante 51 etwa bis zu einer untersten Ebene E des Trennschalters, die durch Schutzelemente 7; 8; 9 der Hakenklemmen 11 definiert ist. Abhängig von der Breite der Sammelschienen und vom Abstand der Schienenbrücke lässt es sich einstellen, wie weit die Sammelschienenabschirmung 46 aus dem Adapter C herausgezogen werden soll.

### Bezugszeichenliste:

- 1: Gehäuse
- 2; 3: Plattenkörper
- 4; 5; 6: Stromschiene
- 7; 8; 9: Schutzelement
- 10: Boden
- 11.1; 11.2, 11.3: Hakenklemme
- 12: Wand
- 13: Schaltgriff
- 14: Öffnung
- 15.1, 15.2: Aussparung (v. 10)
- 16.1, 16.2: Schutzsteg
- 17.1, 17.2, 17.3: Schutzsteg
- 18.1, 18.2: Maskierungselement
- 19: Sollbruchstelle
- 20.1, 20.2: Sitz
- 20.3, 20.4: Sitz
- 21.1, 21.2: Rastrippe
- 22.1, 22.1: Rastdaumen
- 22.3, 22.4: Rastdaumen
- 23.1, 23.2: Innenkante
- 24.1, 24.2: Längskante
- 25.1, 25.2: Sitzelement
- 25.3, 25.4: Sitzelement
- 26: Teilhülse
- 27: Oberseite
- 28: Unterseite
- 29: Querrippe
- 30.1, 30.2: Öffnung (v. Aussparung)
- 31: Scheibe
- 32: Schieber
- 33: Prüföffnung
- 34.1, 34.2: Seitenwand
- 35: Stirnwand
- 36: hintere Wand (v.1)
- 37.1, 37.2: Innensteg
- 38.1, 38.2: Führungskanal
- 39: Eingangslücke
- 40.1, 40.2: Schutzkörper
- 41.1, 41.2: Hülse
- 42.1, 42.2: Hülse
- 43.1, 43.2: Öffnung
- 44.1, 44.2: Isolationstrennwand
- 45.1, 45.2: Plättchen
- 46: Sammelschienenabschirmung
- 47: Abdeckelement
- 48: Führungselement
- 49: Abdeckelement
- 50: Flacheisen
- 51: Kante
- 52.1, 52.2: Montageöffnung
- 53.1, 53.2: Montageöffnung
- 54: Verbindungsstück
- 55: Öffnung
- 56: Montageöffnung
- 57: Bogen
- 58: Montageöffnung
- 59: Öffnung
- 60; 61: Flacheisen
- 62: Eintiefung
- 63.1, 63.2: Rippe
- 64.1, 64.2: Rippe
- 65.1, 65.2: Schraube
- 66: Eintiefung
- 67: Erhebung
- 68: Schmalkante
- 69: Schmalkante
- 70: Schutzkörper
- 100: Sicherheitstrennschalter
- A1; A2: Sammelschienen-Abstand
- B: Unterteil
- C: Adapter
- D: Schaltdeckel
- E: Ebene
- L: Sammelschienensystem
- L1, L2, L3: Sammelschiene

- S: Symmetrielinie

## Patentansprüche

1. Kompakter Niederspannungs-Sicherheitstrennschalter (100), aufweisend:
- einen rippenkastenförmigen Adapter (C) zum Aufsetzen auf ein dreiphasiges, aus Sammelschienen (L1, L2, L3) bestehendes Sammelschienensystem (L),
- über einen Boden (10) des Adapters hinaus ragende Hakenklemmen (11.1; 11.2, 11.3), die zur Herstellung einer Strom- und Klemmverbindung der Sammelschienen (L1, L2, L3) mit den im Adapter (C) befindlichen Stromschienen (4; 5; 6) vorgesehen sind,
wobei der Adapter (C) eine Oberseite (27) und eine der Oberseite gegenüber liegende Unterseite (28) aufweist, die den Boden (10) bildet,
und wobei die Hakenklemmen (11.1; 11.2, 11.3) jeweils durch ein elektrisch nichtleitendes Schutzelement (7; 8; 9) wenigstens teilweise abgedeckt sind,
**dadurch gekennzeichnet, dass**
- am Boden (10) des Adapters (C) wenigstens eine Aussparung (15.1, 15.2) zur Unterbringung eines Plattenelementes (2; 3) vorgesehen ist, das das Schutzelement (7; 8; 9) trägt,
- an dem Plattenelement (2; 3) wenigstens eine Öffnung (14) zur Durchführung der Hakenklemme (11.1; 11.2, 11.3) angeordnet ist,
- und dass das Plattenelement (2; 3) mit seinem Schutzelement (7; 8; 9) sowohl bei einem ersten Sammelschienen-Abstand (A1) als auch bei einem anderen, sich von dem ersten unterscheidenden Sammelschienen-Abstand (A2) an den Hakenklemmen (11.1; 11.3) der ersten und dritten Sammelschiene (L1, L3) abwechselnd einsetzbar ist.

2. Sicherheitstrennschalter nach Anspruch 1, **dadurch gekennzeichnet, dass** die Stromschienen (4; 5; 6) desselben Adapters (C) für unterschiedliche Sammelschienen-Abstände (A1; A2) vorgesehen sind.

3. Sicherheitstrennschalter nach Anspruch 1, **dadurch gekennzeichnet, dass** der erste Sammelschienen-Abstand (A1) 60 mm und der andere Sammelschienen-Abstand (A2) 100 mm beträgt.

4. Sicherheitstrennschalter nach Anspruch 1, **dadurch gekennzeichnet, dass** das Schutzelement (7; 8; 9) in eine etwa rechtwinkelig über das Plattenelement (2; 3) ragende Wand (12) übergeht, wobei sowohl die Wand (12) als auch das Schutzelement in abgewinkelte Schutzstege (16.1, 16.2; 17.1, 17.2, 17.3) ausläuft.

5. Sicherheitstrennschalter nach Anspruch 1 und 4, **dadurch gekennzeichnet, dass** das Plattenelement (2; 3) mit dem Schutzelement (7; 8; 9), der Wand (12) und den Schutzstegen (16.1, 16.2; 17.1, 17.2, 17.3) einen aus einem Materialstück im Spritzgußverfahren gefertigten Schutzkörper (40.1, 40.2) bildet.

6. Sicherheitstrennschalter nach einem der vorhergehenden Ansprüche, **dadurch gekennzeichnet, dass** innerhalb der Aussparung (15.1, 15.2) eine Querrippe (29) angeordnet ist, die die Aussparung in zwei Öffnungen (30.1, 30.2) teilt.

7. Sicherheitstrennschalter nach einem der vorhergehenden Ansprüche, **dadurch gekennzeichnet, dass** der Schutzkörper (40) die in einer Öffnung (30.1, 30.2) befindliche Hakenklemme (11.1; 11.3) für einen vorbestimmten Sammelschienen-Abstand (A1; A2) und zugleich eine für den anderen Sammelschienen-Abstand (A2; A1) vorgesehene Öffnung (30.2, 30.1) abdeckt, die nicht von der Hakenklemme besetzt ist.

8. Sicherheitstrennschalter nach Anspruch 1, **dadurch gekennzeichnet, dass** das Plattenelement (2; 3) wenigstens ein außerhalb der Öffnung (14) liegendes, entfernbares, plattenförmiges Maskierungselement (18.1, 18.2) umfasst, das mit dem restlichen Plattenelement über umlaufende Sollbruchstellen (19) verbunden ist.

9. Sicherheitstrennschalter nach Anspruch 1, **dadurch gekennzeichnet, dass** das Plattenelement (2; 3) in Draufsicht auf seine Flachseite rechteckig ist.

10. Sicherheitstrennschalter nach Anspruch 1, **dadurch gekennzeichnet, dass** das Plattenelement (2; 3) in die Aussparung (15.1, 15.2) abnehmbar eindrückbar ist.

11. Sicherheitstrennschalter nach einem der vorhergehenden Ansprüche, **dadurch gekennzeichnet, dass**
- das Plattenelement (2; 3) an seinen Längskanten (24.1, 24.2) zwei sich gegenüber liegende Rastrippen (21.1, 21.2) und wenigstens zwei sich gegenüber liegende Rastdaumen (22.1, 22.1, 22.3, 22.4) aufweist,
- die Aussparung (15.1, 15.2) abgestufte, zu den Längskanten (24.1, 24.2) und zu den Rastrippen (21.1, 21.2) des Plattenelementes (2; 3) kompatible Innenkanten (23.1, 23.2) aufweist,
- an den Innenkanten (23.1, 23.2) der Aussparung (15.1, 15.2) Sitzelemente (25.1, 25.2, 25.3, 25.4) angeordnet sind, in die die Rastdaumen (22.1, 22.1, 22.3, 22.4) eingreifen.

12. Sicherheitstrennschalter nach Anspruch 7, **dadurch gekennzeichnet, dass** die Sitzelemente (25.1, 25.2, 25.3, 25.4) jeweils in eine an der Unterseite (28) des Adapters befindliche Teilhülse (26) auslaufen.
